# FASCICULE DE BREVET EUROPEEN

(11) **EP 3 911 842 B1**
(45) Date de publication et mention de la délivrance du brevet: **26.02.2025**
(21) Numéro de dépôt: 20704067.6
(22) Date de dépôt: 13.01.2020
(51) Int. Cl.: F01D 11/00, F01D 11/12

(54) **ENSEMBLE POUR UNE TURBOMACHINE**
ANORDNUNG FÜR EINE TURBOMASCHINE
ASSEMBLY FOR A TURBOMACHINE

(30) Priorité: 14.01.2019 FR 1900322; 17.01.2019 FR 1900420
(43) Date de publication de la demande: 24.11.2021
(73) Titulaire: SAFRAN AIRCRAFT ENGINES, 75015 Paris (FR)
(72) Inventeur: GEORGE, Alexis, Hector, Ulysse, 77550 Moissy-Cramayel (FR); SCHOLTES, Christophe, 77550 Moissy-Cramayel (FR); BRUNET, Antoine, Robert, Alain, 77550 Moissy-Cramayel (FR)
(74) Mandataire: Ernest Gutmann - Yves Plasseraud S.A.S.
(86) Numéro de dépôt international: PCT/FR2020/000009
(87) Numéro de publication internationale: WO 2020/148489

(56) Documents cités:
- EP-A1- 3 023 595
- EP-A1- 3 409 902
- EP-A2- 1 712 743

## Description

### Domaine technique de l'invention

L'invention concerne un ensemble pour une turbomachine, telle notamment qu'un turboréacteur ou un turbopropulseur d'avion.

### Etat de la technique antérieure

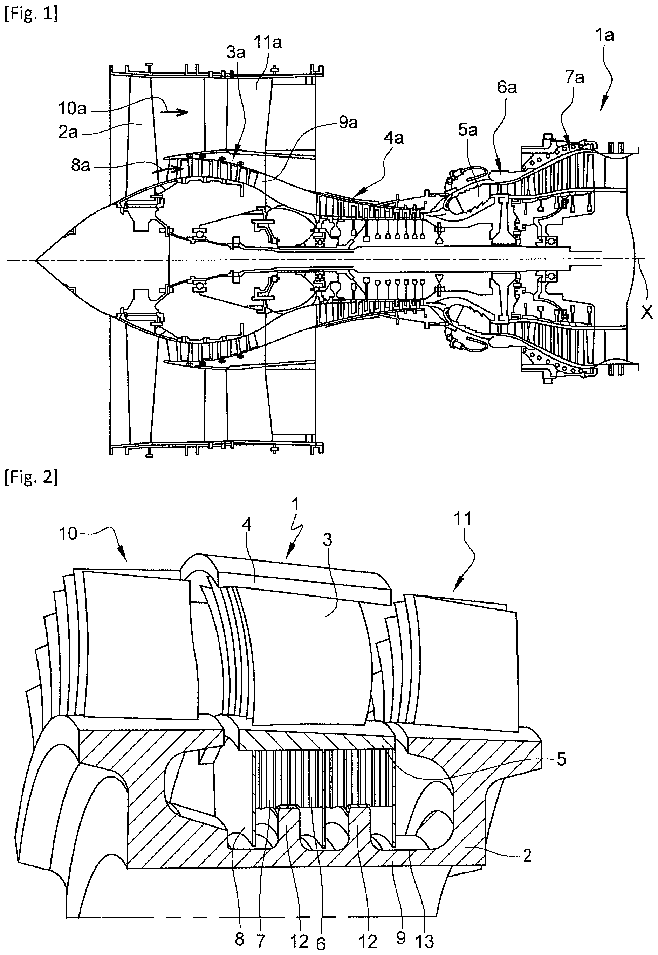

La figure 1 représente une turbomachine 1a à double flux et à double corps. L'axe de la turbomachine est référencé X et correspond à l'axe de rotation des parties tournantes. Dans ce qui suit, les termes axial et radial sont définis par rapport à l'axe X.

La turbomachine 1a comporte, de l'amont vers l'aval dans le sens d'écoulement des gaz, une soufflante 2a, un compresseur basse pression 3a, un compresseur haute pression 4a, une chambre de combustion 5a, une turbine haute pression 6a et une turbine basse pression 7a. L'air issu de la soufflante 2a est divisé en un flux primaire 8a s'écoulant dans une veine annulaire primaire 9a, et un flux secondaire 10a s'écoulant dans une veine annulaire secondaire 11a entourant la veine annulaire primaire 9a.

Le compresseur basse pression 3a, le compresseur haute pression 4a, la chambre de combustion 5a, la turbine haute pression 6a et la turbine basse pression 7a sont ménagés dans la veine primaire 9a.

Le rotor de la turbine haute pression 6a et le rotor du compresseur haute pression 4a sont couplés en rotation par l'intermédiaire d'un premier arbre de manière à former un corps haute pression.

Le rotor de la turbine basse pression 7a et le rotor du compresseur basse pression 3a sont couplés en rotation par l'intermédiaire d'un second arbre de manière à former un corps basse pression, la soufflante 2a pouvant être reliée directement au rotor du compresseur basse pression 3a ou bien par l'intermédiaire d'un train d'engrenage épicycloïdal par exemple.

Le compresseur haute pression 4a comporte un stator et un rotor apte à pivoter par rapport au stator autour de l'axe X de la turbomachine.

Le rotor et le stator comportent chacun une succession de roues aubagées, chaque roue aubagée comportant une roue comprenant une série d'aubes réparties autour de l'axe de la turbomachine.

Chaque aube de stator comporte une pale reliée à une plate-forme radialement externe et à une plate-forme radialement interne délimitant la veine d'écoulement du flux d'air au sein du compresseur. Un bloc ou anneau de matériau abradable s'étend radialement vers l'intérieur depuis la plate-forme radialement interne. Le rotor comporte une virole comprenant une zone annulaire, des léchettes s'étendant radialement vers l'extérieur depuis ladite zone annulaire, l'extrémité radialement externe de la léchette coopérant avec le bloc de matériau abradable de manière à former un joint apte à assurer une étanchéité dynamique en fonctionnement. Une structure de ce type est également connue du document EP 3 023 595.

Il s'avère que, en fonctionnement, un débit d'air relativement important peut transiter entre l'amont et l'aval de la rangée d'aubes correspondante, par l'intermédiaire du jeu radial situé entre les léchettes et le bloc de matériau abradable, ce qui impacte négativement le rendement de la turbomachine.

EP 1 712 743 A2 divulgue une turbine avec une garniture d'étanchéité abrasable entre un rotor et un composant statorique. EP 3 409 902 A1 divulgue un système d'étanchéité pour compresseur de turbomachine.

### Présentation de l'invention

L'invention vise à remédier à cet inconvénient, de façon simple, peu onéreuse et fiable.

A cet effet, l'invention concerne un ensemble pour une turbomachine, comportant les caractéristiques selon la revendication 1.

La léchette et la languette définissent avec le bloc de matériau abradable et la zone annulaire de la virole, des chicanes ou des obstacles permettant d'augmenter les pertes de charges et de favoriser l'étanchéité dynamique entre le rotor et le stator de façon à limiter le débit de fuite entre l'amont et l'aval des aubes. En d'autres termes, les éléments précités forment un joint de type labyrinthe.

Par ailleurs, le fait de disposer d'une languette fine, c'est-à-dire un rapport e1/e2 faible, permet d'augmenter les pertes de charges, et donc l'efficacité du joint dynamique.

Les termes amont et aval sont définis par rapport au sens de circulation des gaz au sein de la turbomachine.

L'utilisation d'un bloc de matériau abradable se présentant sous la forme d'un nid d'abeille permet de mieux résister à des contraintes thermiques élevées, notamment dans le cas d'une utilisation au niveau d'une turbine de turbomachine. Une telle structure permet également de limiter la masse de l'ensemble.

Le fait de disposer d'une languette fine permet également de pouvoir loger aisément ladite languette dans l'encombrement disponible tout en évitant un risque de collision entre la languette et la léchette, en particulier sous l'effet du phénomène de chariotage. On rappelle que le chariotage est le déplacement axial du rotor par rapport au stator en fonctionnement, dû notamment aux tolérances dimensionnelles et de montage entre ces éléments.

La languette et/ou la léchette peuvent s'étendre uniquement dans un plan radial ou peuvent s'étendre de façon oblique par rapport au plan radial.

Le nombre de languettes et/ou de léchettes peut varier en fonction des besoins. L'ensemble peut par exemple comporter deux ou trois léchettes. L'ensemble peut également comporter une, deux ou trois languettes par exemple.

L'ensemble peut comporter une languette située en amont de la ou des léchettes, une languette située en aval de la ou des léchettes, et/ou une languette axialement entre deux léchettes.

L'épaisseur e2 de la léchette peut être au moins égale à la dimension axiale des alvéoles. Dans le cas d'alvéoles de tailles différentes, l'épaisseur e2 de la léchette est au moins égale à la plus grande dimension axiale des alvéoles situées en regard de la léchette.

De cette manière, on s'assure que le flux de gaz ne peut pas contourner l'extrémité libre de la léchette au travers des alvéoles du bloc de matériau abradable.

La surface radialement externe de la virole peut comporter un revêtement apte à réduire l'usure de la virole en cas de frottement entre l'extrémité radialement interne de la languette et la virole.

Le revêtement est par exemple un matériau abrasif.

Le jeu radial J1 entre l'extrémité radialement interne de la languette et la virole peut être compris entre 0,5 et 2 fois le jeu J2 entre l'extrémité radialement externe de la léchette et le bloc abradable.

Ce jeu peut être mesuré dans une configuration particulière, par exemple à chaud ou à froid. Dans le cas où des matériaux différents peuvent être utilisés pour les différents éléments, ces matériaux se déforment différemment sous l'effet des contraintes thermiques notamment.

Le jeu radial J1 est par exemple inférieur à 0,5 mm.

La pale, la plate-forme radialement interne, le bloc de matériau abradable et la languette sont réalisés de façon monobloc.

Ces éléments sont par exemple réalisés par fabrication additive.

La languette présente une structure ondulée.

Une telle structure permet d'augmenter la rigidité de la languette.

Le profil de l'ondulation peut correspondre au profil général des alvéoles du bloc de matériau abradable.

La languette peut présenter une épaisseur, c'est-à-dire une dimension axiale, plus importante dans une zone radialement externe de la languette qu'au niveau de son extrémité radialement interne.

Une telle zone externe élargie permet d'augmenter la rigidité de la languette et permet de la rendre moins sensible aux vibrations. L'extrémité radialement interne de la languette conserve cependant une épaisseur limitée, de façon à réduire les frottements entre la languette et la virole du rotor.

Une lamelle de rigidification peut être plaquée et montée contre une face amont ou aval de la zone radialement interne de la languette.

Une telle lamelle permet, comme précédemment, d'augmenter la rigidité de l'assemblage de la languette et de la lamelle de rigidification. La lamelle et la languette peuvent être réalisées de façon monobloc ou sous la forme de deux éléments distincts. Dans le cas d'éléments distincts, la languette et la lamelle sont montées de façon à être libres de se déplacer et à glisser légèrement l'une par rapport à l'autre en fonctionnement, de manière à autoriser le frottement entre elles et amortir ainsi les vibrations.

La plate-forme radialement interne, le bloc de matériau abradable et la languette peuvent être annulaires et sectorisés, chaque secteur comportant au moins deux pales reliées à un secteur de plate-forme radialement interne, un bloc de matériau abradable et au moins une languette s'étendant radialement vers l'intérieur depuis ledit secteur de plate-forme.

Les différents secteurs angulaires de l'ensemble forment, après montage, un ensemble annulaire. L'utilisation de secteurs angulaires permet de faciliter le montage de l'ensemble. Le nombre de pales par secteur est par exemple compris entre 2 et 10.

La virole et les léchettes sont également annulaires.

L'invention concerne également une turbomachine comportant un ensemble du type précité.

L'ensemble appartient par exemple au compresseur ou à la turbine de la turbomachine.

### Brève description des figures

[Fig. 1] est une vue schématique en coupe axiale d'une turbomachine de l'art antérieur;
[Fig. 2] est une vue en perspective d'un secteur de rotor et d'une partie du stator d'un ensemble selon un exemple qui n'est toutefois pas couvert par les revendications
[Fig. 3] est une vue en perspective d'une partie de l'ensemble de la figure 2 ;
[Fig. 4] est une vue de côté d'une partie de l'ensemble de la figure 2 ;
[Fig. 5] est une vue correspondant à la figure 3, illustrant une forme de réalisation de l'invention ;
[Fig. 6] est une vue correspondant à la figure 4, illustrant une deuxième forme de réalisation de l'invention.

### Description détaillée de l'invention

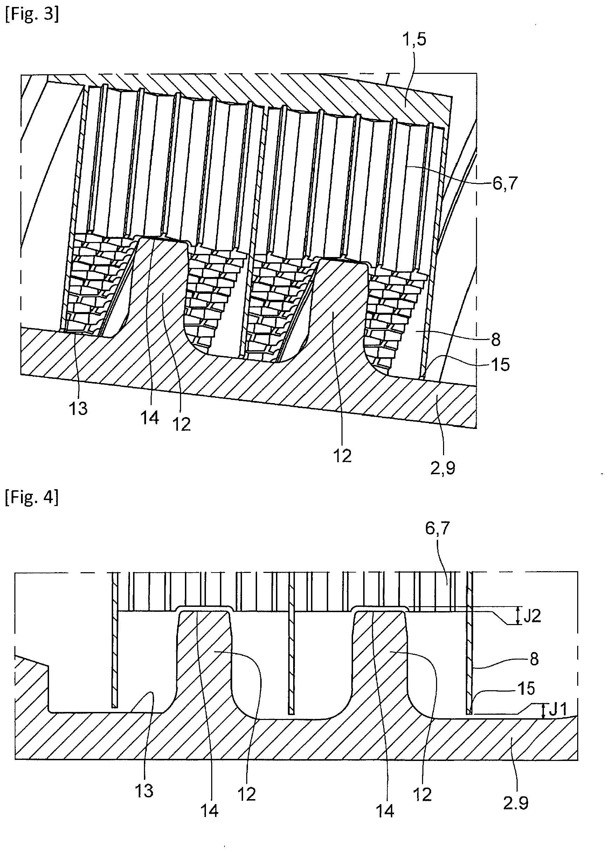

Les figures 2 à 4 illustrent un ensemble pour une turbomachine selon qui n'est pas couvert par les revendications.

L'ensemble comporte un stator 1 et un rotor 2 apte à pivoter par rapport au stator autour d'un axe X, qui est l'axe de la turbomachine.

Le stator 1 est ici sectorisé, seul un secteur étant représenté sur les figures.

Chaque secteur comporte des pales 3, s'étendant radialement entre une plate-forme radialement externe 4 et une plate-forme radialement interne 5, délimitant la veine d'écoulement des gaz au sein de la turbomachine. Le nombre de pales 3 par secteur est par exemple compris entre 2 et 10.

Un bloc de matériau abradable 6 s'étend radialement vers l'intérieur depuis la plate-forme radialement interne 5, le bloc de matériau abradable 6 présente une structure alvéolaire en nid d'abeilles. Les alvéoles 7 ont ici une structure hexagonale, s'étendent radialement et débouchent à leur extrémité radialement interne.

Par ailleurs, des languettes planes 8 s'étendent radialement vers l'intérieur depuis la plate-forme radialement interne 5, et plus particulièrement depuis la face radialement interne de la plate-forme 5. Le nombre de languettes 8 est ici égal à trois, les languettes 8 étant régulièrement espacées axialement les unes des autres.

Les languettes 8 et le bloc de matériau abradable 6 sont situés entièrement en regard de la plate-forme interne 5 et ne s'étendent pas axialement au-delà de ladite plate-forme interne 5, de façon à limiter l'encombrement axial.

Les languettes 8, le bloc de matériau abradable 6, les plates-formes 4, 5 et les pales 3 sont réalisés de façon monobloc, par exemple par fabrication additive.

Le rotor 2 comporte une virole comprenant une partie annulaire cylindrique 9 située axialement entre deux rangées d'aubes 10, 11, appartenant à deux étages de compresseur ou de turbine par exemple. Des léchettes 12, ici deux léchettes 12, s'étendent radialement vers l'extérieur depuis la partie cylindrique 9. La surface radialement externe 13 de la partie cylindrique comporte un revêtement anti-usure. Le revêtement est par exemple un matériau abrasif permettant d'user les languettes 8 sans détériorer la partie cylindrique 9.

Les extrémités libres 14 des léchettes 12, c'est-à-dire les extrémités radialement externes 14 des léchettes 12, sont aptes à coopérer avec la surface radialement interne du bloc de matériau abradable 6, de façon à former un joint dynamique.

Les extrémités libres 15 des languettes 8, c'est-à-dire les extrémités radialement internes 15 des languettes 8, sont aptes à coopérer avec la surface radialement externe 13 de la partie cylindrique 9, de manière à améliorer l'efficacité du joint dynamique. Les profils des extrémités libres 15 des languettes 8 présentent de préférence des angles saillants, de façon à augmenter les pertes de charge.

Un jeu J1 est prévu entre les extrémités radialement internes 15 des languettes 8 et la partie cylindrique 9. De même, un jeu J2 est prévu entre les extrémités radialement externes 14 des léchettes et le bloc de matériau abradable 6. Ces jeux J1, J2 peuvent varier en fonction notamment des effets de dilatations différentielles.

De façon générale, le jeu J1 est par exemple compris entre 0 et 1 mm. De façon plus générale le jeu J1 est compris entre 0,5 et 2 fois le jeu J2. On notera que, l'étanchéité étant directement fonction de la plus petite section du joint dynamique, avoir un jeu J1 supérieur à 2 fois J2 n'a pas sensiblement d'impact sur l'efficacité des languettes 8.

On définit par e1 l'épaisseur e1 de chaque languette 8, c'est-à-dire la dimension axiale de chaque languette 8, au niveau de son extrémité radialement interne.

On définit par e2 l'épaisseur de chaque léchette 12, c'est-à-dire la dimension axiale de chaque léchette 12.

Le rapport e1/e2 est par exemple inférieur ou égal à 0,2.

De façon plus générale, l'épaisseur e2 de chaque léchette 12 est au moins égale à la dimension axiale de chaque alvéole 7 du bloc de matériau abradable 6. De cette manière, on s'assure que le flux de gaz ne peut pas contourner l'extrémité libre 14 de la léchette 12 au travers des alvéoles 7 du bloc de matériau abradable 6.

La léchette 12 et la languette 8 définissent avec le bloc de matériau abradable 6 et la partie cylindrique 9, des chicanes ou des obstacles permettant d'augmenter les pertes de charges et de favoriser l'étanchéité dynamique entre le rotor 2 et le stator 1 de façon à limiter le débit de fuite entre l'amont et l'aval des aubes de stator 1. En d'autres termes, les éléments précités forment un joint de type labyrinthe.

Les termes amont et aval sont définis par rapport au sens de circulation des gaz au sein de la turbomachine.

L'utilisation d'un bloc de matériau abradable 6 se présentant sous la forme d'un nid d'abeille permet de mieux résister à des contraintes thermiques élevées, notamment dans le cas d'une utilisation au niveau d'une turbine de turbomachine. Une telle structure permet également de limiter la masse de l'ensemble.

Le fait de disposer de languettes 8 fines, c'est-à-dire un rapport e1/e2 faible, permet de pouvoir loger aisément les languettes 8 dans l'encombrement disponible tout en évitant un risque de collision entre les languettes 8 et les léchettes 12, en particulier sous l'effet du phénomène de chariotage. Par ailleurs, l'utilisation de languettes fines 8 permet d'augmenter les pertes de charges et donc d'améliorer l'efficacité du joint dynamique.

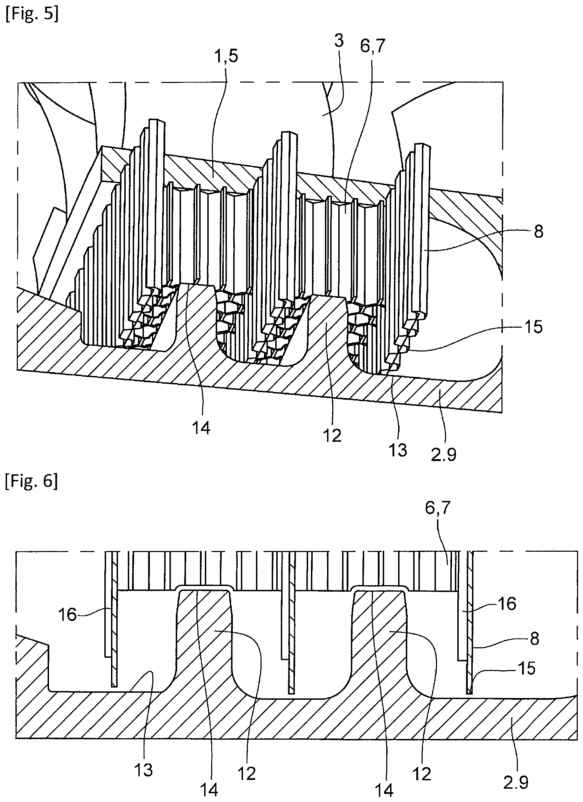

La figure 5 illustre une forme de réalisation de l'invention dans laquelle chaque languette 8 présente une structure ondulée dont le profil de l'ondulation correspond sensiblement au profil hexagonal des alvéoles 7 du bloc de matériau abradable 6. Une telle forme de réalisation permet d'augmenter la rigidité de la languette 8.

La figure 6 illustre encore une autre forme de réalisation dans laquelle une lamelle de rigidification plane 16 est plaquée et montée contre une face amont ou aval, ici une face aval, de la zone radialement interne de chaque languette 8.

Une telle lamelle 16 permet, comme précédemment, d'augmenter la rigidité de l'assemblage de la languette 8 et de la lamelle de rigidification 16. La lamelle 16 et la languette 8 sont deux éléments distincts et sont libres de se déplacer et de glisser légèrement l'une par rapport à l'autre en fonctionnement, de manière à autoriser le frottement entre elles et amortir ainsi les vibrations en fonctionnement.

## Revendications

1. Ensemble pour une turbomachine, comportant un stator (1) et un rotor (2) apte à pivoter par rapport au stator (1) autour d'un axe (X), le stator (1) comportant des aubes comportant chacune une pale (3) reliée à une plate-forme radialement interne (5), un bloc de matériau abradable (6) s'étendant radialement vers l'intérieur depuis la plate-forme radialement interne (5), le rotor (2) comportant une virole comprenant une zone annulaire (9), au moins une léchette (12) s'étendant radialement vers l'extérieur depuis ladite zone annulaire (9), l'extrémité radialement externe de la léchette (12) coopérant avec le bloc de matériau abradable (6), le bloc de matériau abradable (6) présente une structure en nid d'abeille comportant des alvéoles (7) débouchant radialement vers l'intérieur, au moins une languette (8) s'étendant radialement vers l'intérieur depuis la plate-forme (5) ou le bloc de matériau abradable (6), l'extrémité radialement interne (15) de la languette (8) coopérant avec la zone annulaire (9) de la virole du stator (1), le rapport e1/e2 de l'épaisseur e1 de la languette (8), c'est-à-dire la dimension axiale de la languette (8), sur l'épaisseur e2 de la léchette (12), c'est-à-dire la dimension axiale de la léchette (12), est inférieur à 5, de préférence inférieur à 0,2,
**caractérisé en ce que** la languette (8) présente une structure ondulée avec un profil de l'ondulation correspondant à un profil général des alvéoles (7) du bloc de matériau abradable (6).

2. Ensemble selon la revendication 1, **caractérisé en ce que** l'épaisseur e2 de la léchette (12) est au moins égale à la dimension axiale des alvéoles (7).

3. Ensemble selon la revendication 1 ou 2, **caractérisé en ce que** la surface radialement externe (13) de la virole comporte un revêtement apte à réduire l'usure de la virole en cas de frottement entre l'extrémité radialement interne (15) de la languette (8) et la virole.

4. Ensemble selon l'une des revendications 1 à 3, **caractérisé en ce que** le jeu radial J1 entre l'extrémité radialement interne de la languette (8) et la zone annulaire (9) est compris entre 0,5 et 2 fois le jeu J2 entre l'extrémité radialement externe de la léchette (12) et le bloc abradable (6).

5. Ensemble selon l'une des revendications 1 à 4, **caractérisé en ce que** la pale (3), la plate-forme radialement interne (5), le bloc de matériau abradable (6) et la languette (8) sont réalisés de façon monobloc.

6. Ensemble selon l'une des revendications 1 à 5, **caractérisé en ce que** la languette (8) présente une épaisseur, c'est-à-dire une dimension axiale, plus importante dans une zone radialement externe de la languette (8) qu'au niveau de son extrémité radialement interne.

7. Ensemble selon l'une des revendications 1 à 5, caractérisé en qu'une lamelle de rigidification (16) est plaquée et montée contre une face amont ou aval de la zone radialement interne de la languette (8).

8. Ensemble selon l'une des revendications 1 à 7, **caractérisé en ce que** la plate-forme radialement interne (5), le bloc de matériau abradable (6) et les languettes (8) sont annulaires et sectorisés, chaque secteur comportant au moins deux pales (3) reliées à un secteur de plate-forme radialement interne (5), un bloc de matériau abradable (6) et au moins une languette (8) s'étendant radialement vers l'intérieur depuis ledit secteur de plate-forme (5).

9. Turbomachine comportant un ensemble selon l'une des revendications 1 à 8.

## Patentansprüche

1. Anordnung für eine Turbomaschine bzw. ein Turbotriebwerk, umfassend einen Stator (1) und einen Rotor (2), der in Bezug auf den Stator (1) um eine Achse (X) schwenkbar ist, wobei der Stator (1) Schaufeln umfasst, die jeweils ein Schaufelblatt (3) umfassen, das mit einer radial inneren Plattform (5) verbunden ist, wobei sich ein Block aus Verschleißmaterial (6) von der radial inneren Plattform (5) aus radial nach innen erstreckt, wobei der Rotor (2) einen Mantel mit einem ringförmigen Bereich (9) aufweist, wobei sich mindestens eine Leiste (12) von dem ringförmigen Bereich (9) aus radial nach außen erstreckt, wobei das radial äußere Ende der Leiste (12) mit dem Block aus Verschleißmaterial (6) zusammenwirkt, wobei der Block aus Verschleißmaterial (6) eine Wabenstruktur mit radial nach innen mündenden Zellen (7) aufweist, wobei sich mindestens eine Zunge (8) von der Plattform (5) oder dem Block aus Verschleißmaterial (6) aus radial nach innen erstreckt, wobei das radial innere Ende (15) der Zunge (8) mit dem ringförmigen Bereich (9) des Rings des Stators (1) zusammenwirkt, wobei das Verhältnis e1/e2 der Dicke e1 der Zunge (8), d.h. der axialen Abmessung der Zunge (8), zur Dicke e2 der Leiste (12), d.h. der axialen Abmessung der Leiste (12), kleiner als 5, vorzugsweise kleiner als 0,2, ist,
**dadurch gekennzeichnet, dass** die Zunge (8) eine Wellenstruktur aufweist, wobei das Wellenprofil einem Profil der Zellen (7) des Blocks aus Verschleißmaterial (6) entspricht.

2. Anordnung nach Anspruch 1,
**dadurch gekennzeichnet, dass** die Dicke e2 der Leiste (12) mindestens gleich der axialen Abmessung der Zellen (7) ist.

3. Anordnung nach Anspruch 1 oder 2,
**dadurch gekennzeichnet, dass** die radial äußere Fläche (13) des Rings eine Beschichtung aufweist, die dazu geeignet ist, den Verschleiß des Rings bei Reibung zwischen dem radial inneren Ende (15) der Zunge (8) und dem Ring zu verringern.

4. Anordnung nach einem der Ansprüche 1 bis 3,
**dadurch gekennzeichnet, dass** das radiale Spiel J1 zwischen dem radial inneren Ende der Zunge (8) und dem ringförmigen Bereich (9) zwischen dem 0,5- und 2-fachen des Spiels J2 zwischen dem radial äußeren Ende der Leiste (12) und dem Verschleißblock (6) liegt.

5. Anordnung nach einem der Ansprüche 1 bis 4,
**dadurch gekennzeichnet, dass** das Schaufelblatt (3), die radial innere Plattform (5), der Block aus Verschleißmaterial (6) und die Zunge (8) einstückig ausgebildet sind.

6. Anordnung nach einem der Ansprüche 1 bis 5,
**dadurch gekennzeichnet, dass** die Zunge (8) in einem radial äußeren Bereich der Zunge (8) eine größere Dicke, d.h. eine größere axiale Abmessung, aufweist als an ihrem radial inneren Ende.

7. Anordnung nach einem der Ansprüche 1 bis 5,
**dadurch gekennzeichnet, dass** eine Versteifungslamelle (16) gegen eine stromaufwärtige oder stromabwärtige Seite des radial inneren Bereichs der Zunge (8) gedrückt und montiert ist.

8. Anordnung nach einem der Ansprüche 1 bis 7,
**dadurch gekennzeichnet, dass** die radial innere Plattform (5), der Block aus Verschleißmaterial (6) und die Zungen (8) ringförmig und sektorisiert sind, wobei jeder Sektor mindestens zwei Schaufelblätter (3), die mit einem radial inneren Plattformsektor (5) verbunden sind, einen Block aus Verschleißmaterial (6) und mindestens eine Zunge (8) umfasst, die sich von dem Plattformsektor (5) aus radial nach innen erstreckt.

9. Turbomaschine bzw. Turbotriebwerk mit einer Anordnung nach einem der Ansprüche 1 bis 8.

## Claims

1. Assembly for a turbomachine, comprising a stator (1) and a rotor (2) rotatable relative to the stator (1) about an axis (X), the stator (1) comprising blades each comprising a vane (3) connected to a radially inner platform (5), a block of abradable material (6) extending radially inwardly from the radially inner platform (5) the rotor (2) comprising a shroud which comprises an annular area (9), at least one lug (12) extending radially outwardly from said annular area (9), the radially outer end of the lug (12) cooperating with the block of abradable material (6), the block of abradable material (6) having a honeycomb structure with cells (7) opening radially inwards, at least one tab (8) extending radially inwards from the platform (5) or the block of abradable material (6), the radially inner end (15) of the tab (8) cooperating with the annular area (9) of the stator shroud (1), the ratio e1/e2 of the thickness e1 of the tab (8), namely the axial dimension of the tab (8), to the thickness e2 of the lug (12), namely the axial dimension of the lug (12), is less than 5, preferably less than 0.2,
**characterised in that** the tab (8) has a corrugated structure with a profile of corrugation corresponding to a general profile of the cells (7) of the block of abradable material (6).

2. Assembly according to claim 1, **characterized in that** the thickness e2 of the lug (12) is at least equal to the axial dimension of the cells (7).

3. Assembly according to claim 1 or 2, **characterised in that** the radially outer surface (13) of the shroud comprises a coating adapted to reduce wear of the shroud in the event of friction between the radially inner end (15) of the tab (8) and the shroud.

4. Assembly according to any one of claims 1 to 3, **characterized in that** the radial clearance J1 between the radially inner end of the tab (8) and the annular zone (9) is between 0.5 and 2 times the clearance J2 between the radially outer end of the lug (12) and the abradable block (6).

5. Assembly according to any one of claims 1 to 4, **characterized in that** the blade (3), the radially inner platform (5), the abradable material block (6) and the tab (8) are made of one piece.

6. Assembly according to any one of claims 1 to 5, **characterized in that** the tab (8) has a greater thickness, namely an axial dimension, in a radially outer area of the tab (8) than at its radially inner end.

7. Assembly according to any one of claims 1 to 5, **characterised in that** a stiffening plate (16) is pressed against and mounted on an upstream or downstream face of the radially inner area of the tab (8).

8. An assembly according to any of claims 1 to 7, **characterised in that** the radially inner platform (5), the block of abradable material (6) and the tabs (8) are annular and sectorised, each sector comprising at least two blades (3) connected to a radially inner platform sector (5), a block of abradable material (6) and at least one tab (8) extending radially inwardly from said platform sector (5).

9. A turbomachine according to any one of claims 1 to 8.
